# EUROPEAN PATENT APPLICATION

(11) **EP 4 632 924 A1**
(43) Date of publication of application: **15.10.2025**
(21) Application number: 24863007.1
(22) Date of filing: 17.07.2024
(51) Int. Cl.: H01M 50/383, H01M 50/367, H01M 50/211, H01M 10/48, H01M 50/249

(54) **BATTERY MODULE AND BATTERY PACK INCLUDING SAME AND VEHICLE INCLUDING SAME**

(30) Priority: 06.09.2023 KR 20230118625
(71) Applicant: LG Energy Solution, Ltd., Seoul 07335 (KR)
(72) Inventor: PARK, Jeong-Hoon, Daejeon 34122 (KR)
(74) Representative: Plasseraud IP
(86) International application number: PCT/KR2024/010306
(87) International publication number: WO 2025/053425

(57) **Abstract**

Disclosed is a battery module, and a battery pack and a vehicle including the same. The battery module includes a plurality of battery cells; a case configured to accommodate the plurality of battery cells and having a venting hole formed therein so that flame or gas is discharged therethrough; and a blocking member configured to block a portion of the case in which the venting hole is not formed during a thermal event.

## Description

### TECHNICAL FIELD

The present application claims priority to Korean Patent Application No. 10-2023-0118625 filed on September 06, 2023 in the Republic of Korea, the disclosures of which are incorporated herein by reference.

The present disclosure relates to a battery module, and a battery pack and a vehicle including the same, and more specifically, to a battery module capable of blocking a part of the battery module for smooth venting when a thermal event occurs, and a battery pack and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickelbased secondary batteries, thereby having advantages such as free charging and discharging, very low self-discharge rate, and high energy density, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium ion battery (LIB), a polymer lithium-ion battery (PLIB), and the like depending on what positive electrode active material and negative electrode active material are used. Typically, electrodes of these lithium secondary batteries may be formed by coating a positive electrode or negative electrode active material on a current collector, such as an aluminum or copper sheet, a mesh, a film, a foil, or the like, and then drying the same.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

When a thermal event occurs from a battery cell installed in a battery module, flame or gas generated from the battery cell may discharged through venting holes formed at various locations.

Here, depending on the arrangement direction of the battery cells, electrode leads or bus bars may be located on the side surface of the module case, and in this case, venting to the side may not be easy due to the electrode leads or bus bars.

Therefore, when the electrode leads or bus bars of the battery cells are located on the side surface of the module case, a venting hole may be formed in the upper or lower portion of the module case so that the flame or gas generated during a thermal event is vented through the upper or lower portion.

However, in the conventional technology, even if a venting hole is formed at the upper or lower portion of the module case, the upward venting or downward venting is not smooth because the flame or gas generated during a thermal event may move to the side of the module case before being discharged through the venting hole.

### DISCLOSURE

### Technical Problem

Therefore, the present disclosure is directed to providing a battery module, which may block a side surface of the battery module when a thermal event so that venting is smoothly performed in other directions, and a battery pack and a vehicle including the same.

In addition, the present invention is directed to providing a battery module, which may reduce the possibility of explosion of a battery pack by facilitating venting of flame or gas and prevent flame or gas from leaking out of the battery module through a non-preset path, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a plurality of battery cells; a case configured to accommodate the plurality of battery cells and having a venting hole formed therein so that flame or gas is discharged therethrough; and a blocking member configured to block a portion of the case in which the venting hole is not formed during a thermal event.

In an embodiment, the blocking member may be accommodated inside the case before the thermal event occurs and be withdrawn from the case when the thermal event occurs.

In an embodiment, the blocking member may include an expansion portion accommodated in the case and configured to expand by receiving fluid; and a fluid supply portion configured to supply fluid to the expansion portion.

In an embodiment, the venting hole may be formed at an upper side of the case to enable upward venting during the thermal event, and the blocking member may be disposed at a lower side of the case on a side surface of the case.

In an embodiment, the blocking member may have a balloon shape and expand from a lower side of the case to the upper side during the thermal event.

In an embodiment, when the expansion portion is expanded, the expansion portion may have a height corresponding to the battery cell.

In an embodiment, the battery cell may be a pouch-type battery cell having an electrode lead formed at a side surface thereof, and the blocking member may be positioned close to the electrode lead

In an embodiment, a barrier may be formed inside the case so that the battery cell is disposed therein, and the blocking member may be formed at a position corresponding to the barrier

In an embodiment, a pocket portion protruding downward from the case may be formed on the case, and the blocking member may be accommodated in the pocket portion of the case.

In an embodiment, the fluid supply portion may be provided as a carbon dioxide cartridge that supplies carbon dioxide (CO2).

In an embodiment, the battery module may further comprise a sensor unit configured to sense an inside of the case; and a control unit configured to operate the fluid supply portion according to the sensing of the sensor unit.

In an embodiment, the sensor unit may sense a pressure, a temperature or an amount of gas inside the case.

In an embodiment, the control unit may control the fluid supply portion to open according to the sensing of the sensor unit.

Meanwhile, according to another aspect of the present disclosure, there may be provided a battery pack including the battery module described above, and a vehicle including the battery module.

### Advantageous Effects

Embodiments of the present disclosure have the effect of blocking the side surface of the battery module when a thermal event occurs, so that venting is smoothly performed in other directions.

In addition, the present disclosure has the effect of reducing the possibility of explosion of the battery pack by facilitating venting of flame or gas, and preventing flame or gas from leaking out of the battery module through a non-preset path.

However, the effects that can be obtained through the present disclosure are not limited to the above, and other effects not mentioned herein will be clearly understood by those skilled in the art from the following description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery module according to an embodiment of the present disclosure in an assembled state.
FIG. 2 is an exploded perspective view showing the battery module according to an embodiment of the present disclosure.
FIG. 3 is a drawing showing the appearance of a blocking member before operation in the battery module according to an embodiment of the present disclosure.
FIG. 4 is a drawing showing the blocking member after operation from FIG. 3.
FIG. 5 is a drawing viewed along arrow A of FIG. 3.
FIG. 6 is an enlarged view showing part B of FIG. 5.
FIG. 7 is a drawing showing the blocking member after operation from FIG. 6.
FIG. 8 is a drawing showing the blocking member of FIG. 7 before and after operation.
FIG. 9 is a drawing showing a modified embodiment of FIG. 7.
FIG. 10 is a drawing showing the blocking member of FIG. 7 before and after operation.
FIG. 11 is a drawing schematically showing the configuration of a battery pack including the battery module according to each embodiment of the present disclosure.
FIG. 12 is a drawing for explaining a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

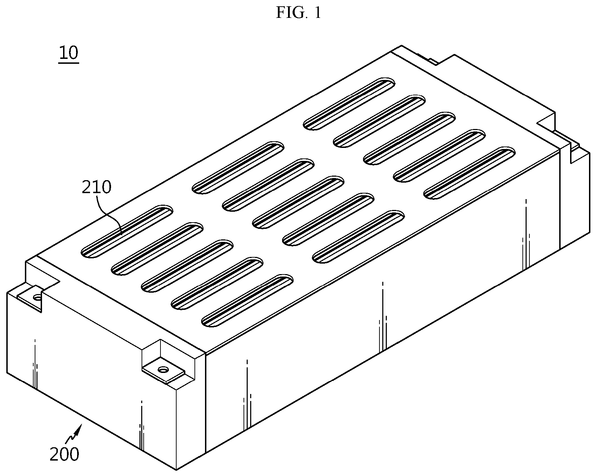

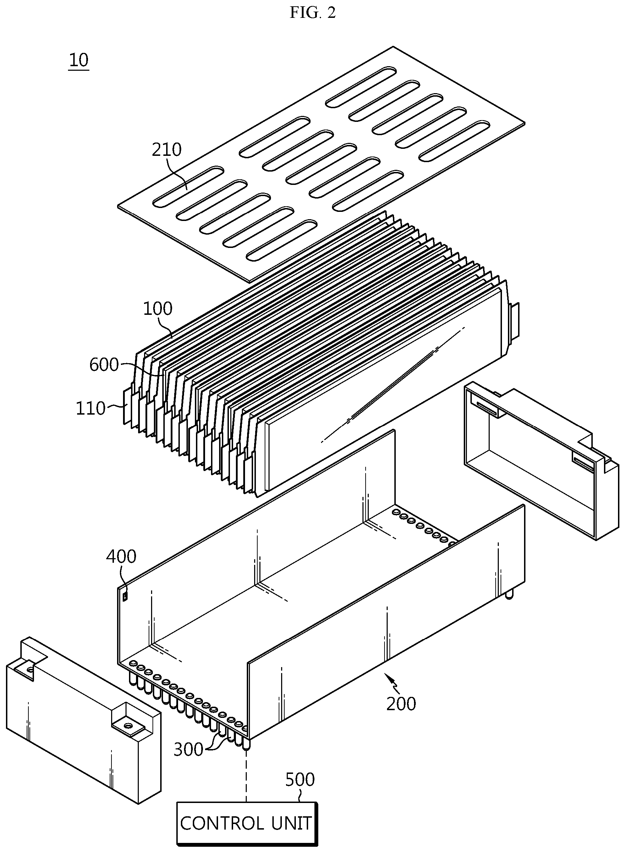

FIG. 1 is a perspective view showing a battery module according to an embodiment of the present disclosure in an assembled state, and FIG. 2 is an exploded perspective view showing the battery module according to an embodiment of the present disclosure.

Referring to FIGS. 1 and 2, the battery module 10 according to an embodiment of the present disclosure includes a plurality of battery cells 100, a case 200, and a blocking member 300.

The battery cell 100 is provided in plurality. The battery cell 100 may have various structures, and the plurality of battery cells 200 may be stacked in various ways.

The battery cell 100 may be configured in a structure in which a plurality of unit cells, in which a positive electrode plate, a separator, and a negative electrode plate are arranged in sequence, or a plurality of bi-cells, in which a positive electrode plate, a separator, a negative electrode plate, a separator, a positive electrode plate, a separator, and a negative electrode plate are arranged in sequence, is stacked according to the battery capacity.

The battery cell 100 may have an electrode lead 110. The electrode lead 110 is a kind of terminal that is exposed to the outside and connected to an external device, and may be made of a conductive material. The electrode lead 110 may include a positive electrode lead and a negative electrode lead.

The positive electrode lead and the negative electrode lead may be disposed at opposite sides with respect to the longitudinal direction of the battery cell 100, or the positive electrode lead and the negative electrode lead may be located at the same side with respect to the longitudinal direction of the battery cell 100.

The battery cell 100 may have a plurality of cartridges (not shown) that accommodate the battery cells 100. Each cartridge (not shown) may be manufactured by plastic injection molding, and a plurality of cartridges (not shown) having a storage portion capable of storing the battery cells 100 may be stacked. A cartridge assembly in which a plurality of cartridges (not shown) is stacked may have connector elements or terminal elements.

The connector elements may include, for example, various types of electrical connection components or members for connection with a BMS (Battery Management System) (not shown) capable of providing data on the voltage or temperature of the battery cell 100 or the like.

In addition, the terminal elements are main terminals connected to the battery cell 100 and include a positive electrode terminal and a negative electrode terminal. The terminal element may have a terminal bolt to be electrically connected to the outside structure. Meanwhile, the battery cell 100 may have various shapes.

The plurality of battery cells 100 are accommodated in the case 200. Also, the case 200 surrounds the battery cells 100 to protect the battery cells 100 from external vibration or impact.

A venting hole 210 through which a flame or gas is discharged is formed in the case 200. For example, referring to FIGS. 1 and 2, the venting hole 210 may be formed at the upper side of the case 200, but is not limited thereto. For example, the venting hole 210 may be formed at the lower side of the case 200 for downward venting.

For convenience of explanation, the following description focuses on the case where the venting hole 210 is formed at the upper side of the case 200.

When a plurality of battery cells 100 are stacked to form a battery cell stack, the case 200 may be formed in a shape corresponding to the shape of the battery cell stack. For example, when the battery cell stack is formed in a hexahedral shape, the case 200 may also be formed in a hexahedral shape corresponding thereto.

The case 200 may be manufactured, for example, by bending a metal plate, and as a result, the case 200 may be manufactured as an integrated piece. If the case 200 is manufactured as an integrated piece, the coupling process may be simplified and easy. Alternatively, the case 200 may be configured as a separate type and coupled by welding or the like. However, the material of the case 200 is not limited to metal.

The blocking member 300 blocks a portion of the case 200 where the venting hole 210 is not formed during a thermal event. Referring to FIG. 2, the battery cell 100 may be a pouch-type battery cell 100 having an electrode lead 110 formed at a side surface thereof. In the case where the battery cell 100 is a pouch-type battery cell 100, if a plurality of battery cells 100 are stacked and accommodated in the case 200, the electrode leads 110 of the battery cells 100 are arranged at the side surface of the case 200.

In addition, when the electrode leads 110 of the battery cells 100 are placed at the side surface of the case 200, bus bars (not shown) electrically connected to the electrode leads 110 are also located at the side surface of the case 200.

Since the electrode leads 110 and the bus bars (not shown) are arranged at the side surface of the case 200 as above, it may not be appropriate to form the venting hole 210 in the side surface of the case 200. That is, during a thermal event, since the flame or gas collides with the electrode leads 110 or the bus bars (not shown), it is difficult to discharge the flame or gas to the side.

Therefore, as described above, when the electrode leads 110 of the battery cells 100 are placed at the side surface of the case 200, the venting hole 210 for discharging flame or gas during a thermal event may be formed at the upper side of the case 200, thereby enabling upward venting.

However, the flame or gas generated during the thermal event may move to the side surface of the case 200 through the gap between the electrode leads 110, and in this case, upward venting may not be smooth.

Therefore, the battery module 10 according to an embodiment of the present disclosure has an effect of preventing flame or gas from moving to the side surface of the case 200 by blocking the side surface of the case 200 by the blocking member 300 during a thermal event, and thus there is an effect of facilitating upward venting by inducing flame or gas to move to the upper side of the case 200 where the venting hole 210 is formed.

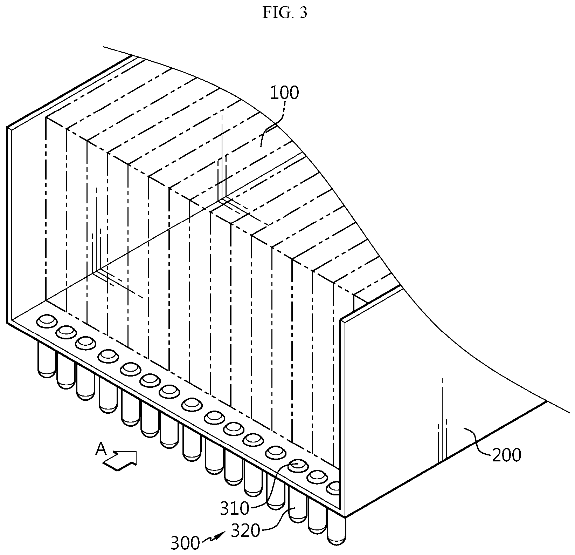

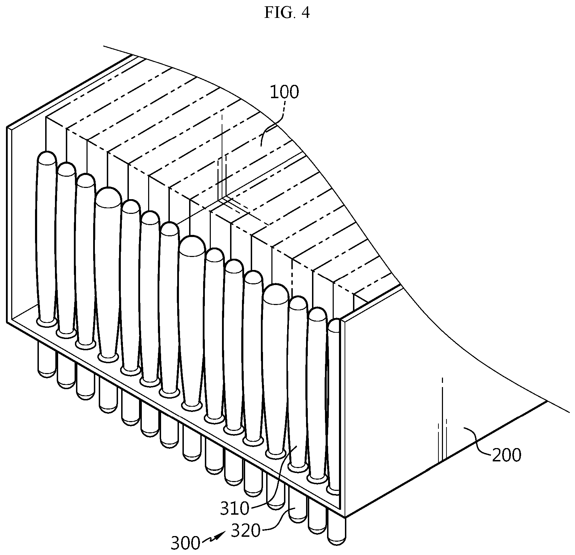

FIG. 3 is a drawing showing the appearance of a blocking member before operation in the battery module according to an embodiment of the present disclosure, and FIG. 4 is a drawing showing the blocking member after operation from FIG. 3.

Referring to FIGS. 2 and 3, in this embodiment, the blocking member 300 may be placed at the side surface of the case 200 to block a portion of the case 200 where the venting hole 210 is not formed during a thermal event, for example, the side surface of the case 200. In addition, the blocking member 300 may be positioned close to the electrode lead 110. The blocking member 300 may be provided in plurality and placed in a space between the electrode leads 110.

Specifically, as shown in FIG. 3, the blocking member 300 may be placed at the lower side of the case 200 on the side surface of the case 200, but the position of the blocking member 300 is not limited thereto.

Referring to FIGS. 3 and 4, the blocking member 300 may be configured to be accommodated inside the case 200 before a thermal event occurs and to be withdrawn from the case 200 when a thermal event occurs. In FIGS. 3 and 4, in order to clearly illustrate the blocking member 300, the battery cells 100 are schematically illustrated with a dashed line, and the electrode leads 110 are not illustrated.

Referring to FIG. 3, the blocking member 300 may include an expansion portion 310 and a fluid supply portion 320. The expansion portion 310 receives fluid from the fluid supply portion 320 and expands. In a typical situation before a thermal event occurs, the expansion portion 310 is accommodated in the case 200.

That is, before a thermal event occurs, the expansion portion 310 is accommodated in the case 200 as in FIG. 3, but when a thermal event occurs, the expansion portion 310 receives fluid from the fluid supply portion 320 and expands as in FIG. 4.

In addition, when the expansion portion 310 expands, the expansion portion 310 blocks the side surface of the case 200 as shown in FIG. 4, thereby preventing the flame or gas from moving to the side surface of the case 200. Here, the expansion portion 310 may be made of various types of refractory materials so as to withstand the flame or gas (e.g., high-temperature gas).

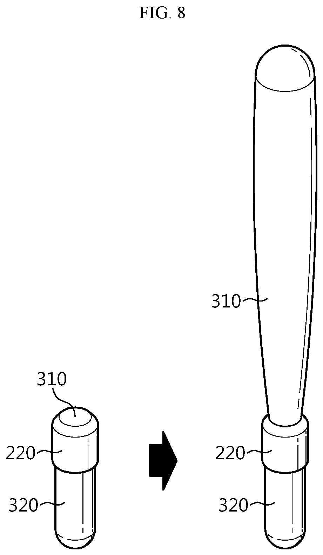

The expansion portion 310 of the blocking member 300 may be formed in various shapes, and with reference to FIG. 4, for example, may have a balloon shape. That is, when the fluid supply portion 320 supplies fluid to the expansion portion 310 during a thermal event, the expansion portion 310 may swell from the lower side of the case 200 to the upper side to block the side surface of the case 200. The expansion process of the expansion portion 310 may be referred to FIG. 8.

Referring to FIG. 4, when the expansion portion 310 is expanded, the expansion portion 310 may have a height corresponding to the battery cell 100. Here, the height corresponding to the battery cell 100 does not necessarily need to be the same height as the battery cell 100, and means a height that may sufficiently block the side surface of the case 200 to prevent the flame or gas from moving to the side surface of the case 200.

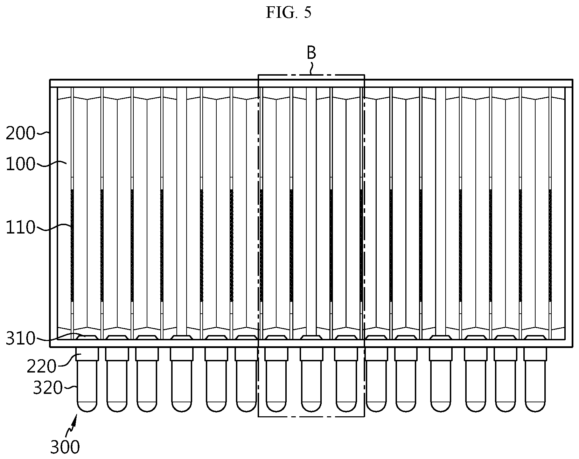

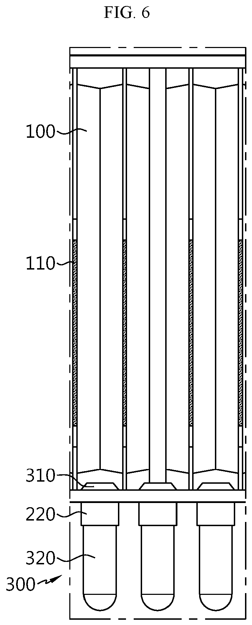

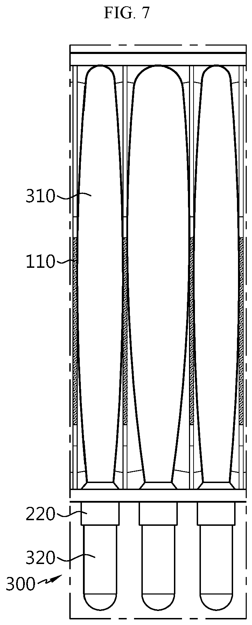

FIG. 5 is a drawing viewed along arrow A of FIG. 3, FIG. 6 is an enlarged view showing part B of FIG. 5, FIG. 7 is a drawing showing the blocking member after operation from FIG. 6, and FIG. 8 is a drawing showing the blocking member of FIG. 7 before and after operation.

Referring to FIGS. 5 to 7, the expansion portion 310 may be placed between the electrode leads 110 of the battery cells 100 so as to expand between the electrode leads 110 of the battery cells 100.

In this case, the blocking member 300 may be positioned so as not to interfere with the electrical coupling of the electrode leads 110 and the bus bars (not shown). Since the expansion portion 310 is accommodated in the case 200 before a thermal event occurs, the blocking member 300 does not interfere with the electrode leads 110 or the bus bars (not shown).

However, if a thermal event occurs in any one of the battery cells 100 and flame or gas is emitted, this situation means that an abnormal phenomenon has occurred in the corresponding battery cell 100, so it may be acceptable for the expansion portion 310 to expand and interfere to some extent with the electrode leads 110 or the bus bars (not shown).

Meanwhile, as a modified embodiment, a barrier 600 (see FIG. 2) may be formed inside the case 200 so that the battery cell 100 is disposed therein. Also, the blocking member 300 may be formed at a position corresponding to the barrier 600. However, this is only one embodiment.

Referring to FIG. 5, a pocket portion 220 protruding downward from the case 200 may be formed on the case 200. In addition, the expansion portion 310 of the blocking member 300 may be accommodated in the pocket portion 220 of the case 200. However, the position of the pocket portion 220 is not necessarily limited thereto.

The pocket portion 220 may be formed integrally with the case 200, or may be manufactured separately and then coupled to the case 200.

The fluid supply portion 320 supplies fluid to the expansion portion 310 when a thermal event occurs.

The fluid supplied from the fluid supply portion 320 to the expansion portion 310 may vary. For example, the fluid supply portion 320 may be provided as a carbon dioxide cartridge to supply carbon dioxide (CO2) to the expansion portion 310. When the fluid supply portion 320 supplies carbon dioxide to the expansion portion 310, there is an effect of the carbon dioxide moving quickly to the expansion portion 310.

In addition, as described above, the expansion portion 310 may be made of a refractory material, but if the temperature of the flame or high-temperature gas exceeds a preset range and the expansion portion 310 of the refractory material is damaged, or if the expansion portion 310 has a defect in the manufacturing stage, carbon dioxide may leak to the outside from the expansion portion 310 when a thermal event occurs. In this case, carbon dioxide has a high latent heat of vaporization and thus may absorb a large amount of heat, so it also has the advantage of acting as a fire extinguishing agent.

However, the fluid supplied from the fluid supply portion 320 is not necessarily limited to carbon dioxide.

Meanwhile, the expansion portion 310 may be configured to expand according to the sensing of the sensor unit 400 installed inside the case 200. To this end, the battery module 10 according to an embodiment of the present disclosure may include a sensor unit 400 that senses the inside of the case 200 and a control unit 500 that operates the fluid supply portion 320 according to the sensing of the sensor unit 400. The control unit 500 may control the fluid supply portion 320 according to the sensing of the sensor unit 400.

The sensor unit 400 may be a sensor that senses the pressure inside the case 200. In this case, the control unit 500 may control the fluid supply portion 320 to open when the pressure inside the case 200 exceeds a preset pressure.

Alternatively, the sensor unit 400 may be a sensor that senses the temperature inside the case 200. In this case, the control unit 500 may control the fluid supply portion 320 to open when the temperature inside the case 200 exceeds a preset temperature.

Alternatively, the sensor unit 400 may be a sensor that senses the amount of gas inside the case 200. In this case, the control unit 500 may control the fluid supply portion 320 to open when the amount of gas inside the case 200 exceeds a preset amount of gas.

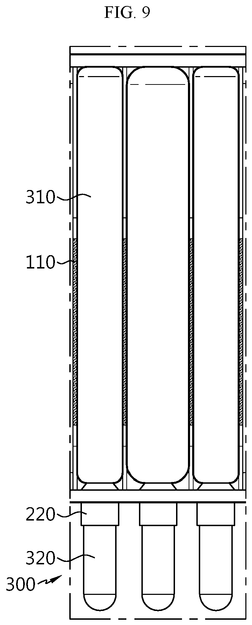

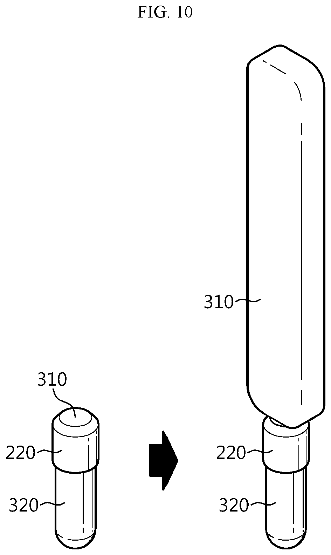

FIG. 9 is a drawing showing a modified embodiment of FIG. 7, and FIG. 10 is a drawing showing the blocking member of FIG. 7 before and after operation.

The modified embodiment of FIGS. 9 and 10 has a difference in the shape of the expansion portion 310 of the blocking member 300 and also has a difference in the blocking area compared to FIG. 7. In the case of FIG. 7, the expansion portion 310 is formed in a shape similar to an oval, but in the case of FIG. 9, the expansion portion 310 is formed in a shape similar to a rectangle. However, the shape of the expansion portion 310 of the blocking member 300 is not limited thereto.

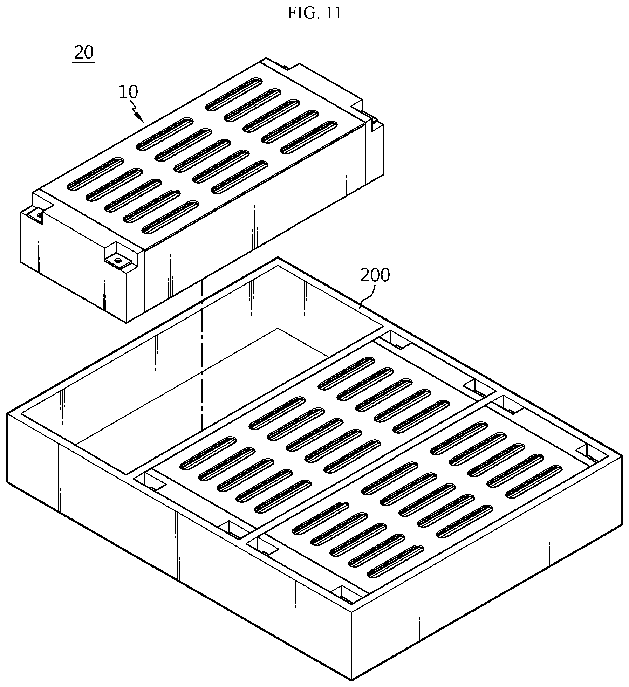

FIG. 11 is a drawing schematically showing the configuration of a battery pack including the battery module according to each embodiment of the present disclosure.

Referring to FIG. 11, a battery pack 20 according to an embodiment of the present disclosure may include one or more battery modules 10 according to each embodiment of the present disclosure described above. In addition, the battery pack 20 may further include, in addition to the battery module 10, a pack case 200 for storing the battery module 10, and various devices for controlling charging and discharging of the battery module 10, such as a BMS, a current sensor, a fuse, or the like.

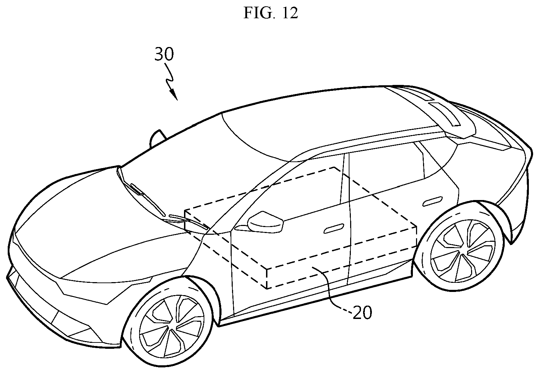

FIG. 12 is a drawing for explaining a vehicle including the battery pack according to each embodiment of the present disclosure.

Referring to FIG. 12, a vehicle 30 according to an embodiment of the present disclosure may include the aforementioned battery module 10 or battery pack 20, and the battery pack 20 may include the battery module 10. In addition, the battery module 10 according to an embodiment of the present disclosure may be applied to the vehicle 30, for example, a predetermined vehicle that is configured to use electricity, such as an electric vehicle or a hybrid vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including them, and particularly, is available to industries related to secondary batteries.

## Claims

1. A battery module comprising:
a plurality of battery cells;
a case configured to accommodate the plurality of battery cells and having a venting hole formed therein so that flame or gas is discharged therethrough; and
a blocking member configured to block a portion of the case in which the venting hole is not formed during a thermal event.

2. The battery module according to claim 1,
wherein the blocking member is accommodated inside the case before the thermal event occurs and is withdrawn from the case when the thermal event occurs.

3. The battery module according to claim 2,
wherein the blocking member includes:
an expansion portion accommodated in the case and configured to expand by receiving fluid; and
a fluid supply portion configured to supply fluid to the expansion portion.

4. The battery module according to claim 3,
wherein the venting hole is formed at an upper side of the case to enable upward venting during the thermal event, and the blocking member is disposed at a lower side of the case on a side surface of the case.

5. The battery module according to claim 4,
wherein the blocking member has a balloon shape and expands from a lower side of the case to the upper side during the thermal event.

6. The battery module according to claim 3,
wherein when the expansion portion is expanded, the expansion portion has a height corresponding to the battery cell.

7. The battery module according to claim 4,
wherein the battery cell is a pouch-type battery cell having an electrode lead formed at a side surface thereof, and
wherein the blocking member is positioned close to the electrode lead.

8. The battery module according to claim 3,
wherein a barrier is formed inside the case so that the battery cell is disposed therein, and
wherein the blocking member is formed at a position corresponding to the barrier.

9. The battery module according to claim 2,
wherein a pocket portion protruding downward from the case is formed on the case, and the blocking member is accommodated in the pocket portion of the case.

10. The battery module according to claim 3,
wherein the fluid supply portion is provided as a carbon dioxide cartridge that supplies carbon dioxide (CO2).

11. The battery module according to claim 3, further comprising:
a sensor unit configured to sense an inside of the case; and
a control unit configured to operate the fluid supply portion according to the sensing of the sensor unit.

12. The battery module according to claim 11,
wherein the sensor unit senses a pressure, a temperature or an amount of gas inside the case.

13. The battery module according to claim 11,
wherein the control unit controls the fluid supply portion to open according to the sensing of the sensor unit.

14. A battery pack comprising the battery module according to any one of claims 1 to 13.

15. A vehicle comprising the battery module according to any one of claims 1 to 13.
